# EUROPÄISCHE PATENTSCHRIFT

(11) **EP 3 488 303 B1**
(45) Veröffentlichungstag und Bekanntmachung des Hinweises auf die Patenterteilung: **17.05.2023**
(21) Anmeldenummer: 17749630.4
(22) Anmeldetag: 24.07.2017
(51) Int. Cl.: G06F 9/451, G06F 3/14, G06F 11/10, G09G 5/36, G05B 19/042, G09G 3/00

(54) **ÜBERWACHEN EINER ANZEIGE EINES FÜHRERSTANDS EINES VERKEHRSMITTELS**
MONITORING OF A DISPLAY OF A DRIVER'S CAB OF A MEANS OF TRANSPORTATION
SURVEILLANCE D'UNE INDICATION DANS UNE CABINE DE CONDUITE D'UN MOYEN DE TRANSPORT

(30) Priorität: 23.08.2016 DE 102016215811
(43) Veröffentlichungstag der Anmeldung: 29.05.2019
(73) Patentinhaber: Siemens Mobility GmbH, 81739 München (DE)
(72) Erfinder: ACKERMANN, Andreas, 90765 Fürth (DE); HORN, Andreas, 91052 Erlangen (DE); RASTOFER, Uwe, 91052 Erlangen (DE)
(74) Vertreter: Siemens Patent Attorneys
(86) Internationale Anmeldenummer: PCT/EP2017/068574
(87) Internationale Veröffentlichungsnummer: WO 2018/036729

(56) Entgegenhaltungen:
- EP-A1- 2 988 496
- EP-B1- 2 988 496
- WO-A2-2007/033902

## Beschreibung

Die Erfindung betrifft ein Verfahren zum Überwachen einer Anzeige eines Führerstands eines Verkehrsmittels. Überdies betrifft die Erfindung eine Anzeigeeinrichtung. Zudem betrifft die Erfindung einen Führerstand für ein Verkehrsmittel.

Bei der Anzeige von Informationen zum aktuellen Fahrzustand eines Zugs sind im Führerstand Anzeigen installiert. Die angezeigten Informationen müssen dahingehend zuverlässig sein, dass dem Triebwagenführer keine falschen Daten angezeigt werden. Beispielsweise darf dem Triebwagenführer während der Fahrt keine zu niedrige Geschwindigkeit angezeigt werden. Zur Überwachung der Zuverlässigkeit der angezeigten Informationen wird ein Vergleich einer Soll-Anzeige mit einer Ist-Anzeige durchgeführt. Bei dieser Art von Prüfverfahren wird für jeden Sollwert eine Soll-Anzeige ermittelt und darüber ein Prüfcode gebildet. Bei dem Anzeigegerät wird die digitale Schnittstelle zwischen Grafikkarte und Bildschirm mitgelesen und ebenfalls für die Ist-Anzeige ein Ist-Prüfcode gebildet. Eine sichere Vergleichseinheit prüft während der Fahrt die Ist-Prüfcodes durch Vergleich mit den Soll-Prüfcodes und stellt so fest, ob die Anzeige korrekt ist.

Bei herkömmlichen Prüfverfahren werden Prüfcodes bzw. Prüfsummen, auch als Ist-Prüfcode bezeichnet, die nahe an der Anzeige gewonnen wurden, mit einer Soll-Prozessgröße, verglichen. Für den Vergleich kann entweder der Ist-Prüfcode über eine Tabelle in eine Ist-Prozessgröße übersetzt werden und diese dann mit der Soll-Prozessgröße verglichen werden oder alternativ die Soll-Prozessgröße über eine Tabelle in einen Soll-Prüfcode übersetzt werden und dieser dann mit dem Ist-Prüfcode verglichen werden. Bei der Erzeugung des Soll-Prüfcodes wird dieser als Referenz-Prüfcode mit Hilfe einer sogenannten Prüfsummen-Vorhersageeinheit berechnet bzw. aus einer Tabelle ermittelt, während der Ist-Prüfcode mit Hilfe eines Prüfsummen-Extraktors aus dem Istwert der Ist-Prozessgröße sowie Bildinformationen, wie zum Beispiel Pixeldaten, der Bilddarstellung des Wertes der Ist-Prozessgröße gewonnen wird.

In EP 2 273 369 B1 wird ein Prüfverfahren beschrieben, bei dem über eine "Lookup-Tabelle" ein Vergleich zwischen Prüfcodes erfolgt. Wird dabei ein entsprechender Vergleichscode identifiziert, so wird ein diesem Vergleichscode zugeordneter Wert mit dem Wert der tatsächlichen Eingangsgröße verglichen.

In DE 10 2014 214 667 A1 wird ein Prüfverfahren für eine Darstellung einer dreidimensionalen graphischen Information beschrieben.

In US 2015/ 0 242 660 A1 erfolgt eine Identifizierung unterschiedlicher Artikel über einen auf einem Primzahlenprodukt basierenden Identifizierungscode.

In DE 10 2009 044 555 B4 wird eine Vorrichtung mit einer Divisionseinheit zur Aufteilung eines Datenstroms in mehrere Datensegmente und ersten und zweiten Prüfeinheiten, welche CRC-Prüfungen an den Datensegmenten durchführen, beschrieben.

In EP 2 988 496 A1 wird ein Verfahren zum Kombinieren von Bildern einer Fahrzeugkamera, welche einen Bereich um das Fahrzeug herum abbilden, beschrieben. Dabei werden Fehlausrichtungen von zu kombinierenden Bildern korrigiert.

Es ist eine Aufgabe der vorliegenden Erfindung, ein alternatives Verfahren und eine entsprechende Anordnung zum Überwachen einer Anzeige in einem Führerstand eines Verkehrsmittels anzugeben.

Diese Aufgabe wird durch ein Verfahren zum Überwachen einer Anzeige eines Führerstands eines Verkehrsmittels gemäß Patentanspruch 1, eine Anzeigeeinrichtung gemäß Patentanspruch 6, einen Führerstand gemäß Patentanspruch 7, einem Computerprogrammprodukt gemäß Patentanspruch 8 und einem computerlesbaren Medium gemäß Patentanspruch 9 gelöst.

Bei dem erfindungsgemäßen Verfahren zum Überwachen einer Anzeige eines Führerstands eines Verkehrsmittels wird eine Bildinformation von einer Anzeigeeinrichtung erfasst. Die Bildinformation der Anzeigeeinrichtung wurde von der Anzeigeeinrichtung auf Basis einer von einer Fahrzeugsteuerungseinrichtung empfangenen Soll-Prozessgröße erzeugt. Auf Basis der erfassten Bildinformation wird ein Ist-Prüfcode ermittelt. Der Prüfcode ergibt sich aus der Bildinformation, beispielsweise umfassend Pixeldaten, einer bildlichen Darstellung des Werts der Prozessgröße auf der Anzeige des Führerstands.

Weiterhin wird eine dem ermittelten Ist-Prüfcode anhand einer ersten Tabelle eindeutig zugeordnete Zweierpotenz ermittelt. Als Zweierpotenz soll in diesem Zusammenhang eine als ganzzahlige Potenz zur Basis 2 notierbare Zahl verstanden werden. Eine solche Zahl kann zum Beispiel als Binärzahl mit einer führenden "1" und folgenden Ziffern mit dem Wert "0" geschrieben werden. Zusätzlich wird eine von einer Fahrzeugsteuerungseinrichtung erzeugte Soll-Prozessgröße erfasst. Als Soll-Prozessgröße soll in diesem Zusammenhang ein auf der Anzeige des Führerstands anzuzeigender Messwert verstanden werden. Vorzugsweise soll dieser Messwert einem Fahrzustand des Verkehrsmittels, noch bevorzugter die Kinematik des Verkehrsmittels, beschreiben.

Zu der Soll-Prozessgröße wird eine der Soll-Prozessgröße anhand einer zweiten Tabelle eindeutig zugeordnete Zweierpotenzsumme erfasst. Die Zweierpotenzsumme kann als eine Art Erwartungswert aufgefasst werden. Als Erwartungswert soll in diesem Zusammenhang ein Wert verstanden werden, der die einem Wert einer Prozessgröße zugeordneten "erlaubten" bzw. "korrekten" bildlichen Darstellungen repräsentiert. Im Grenzfall repräsentiert dieser Erwartungswert nur eine einzige bildliche Darstellung, deren Darstellung dem exakten Wert der zugeordneten Prozessgröße entspricht. Alternativ kann der Erwartungswert jedoch auch eine Mehrzahl von bildlichen Darstellungen repräsentieren. Mehrere "erlaubte" bzw. "korrekte" bildliche Darstellungen sind möglich, wenn es ein Toleranzintervall um den exakten Wert einer Prozessgröße gibt oder wenn sich lediglich die Farbinformationen unterscheiden oder beides zusammen.

Schließlich wird geprüft, ob die bildliche Darstellung zum Wert der Soll-Prozessgröße "erlaubt" bzw. "korrekt" ist, indem ermittelt wird, ob die über den Ist-Prüfcode der bildlichen Darstellung zugeordnete Zweierpotenz in der der Soll-Prozessgröße zugeordneten Zweierpotenzsumme enthalten ist. Ist die Zweierpotenz in der Zweierpotenzsumme enthalten, kann die bildliche Darstellung der erfassten Soll-Prozessgröße als korrekt eingestuft werden. Ist die Zweierpotenz nicht in der Zweierpotenzsumme enthalten, muss davon ausgegangen werden, dass die bildliche Darstellung der Soll-Prozessgröße als fehlerhaft einzustufen ist. Als "in der Zweierpotenzsumme enthalten" soll eine Zweierpotenz verstanden werden, wenn bei einem bitweisen Vergleich bzw. einer bitweisen UND-Operation zwischen Zweierpotenzsumme und Zweierpotenz das logische Ergebnis "1" bzw. "wahr" erhalten wird.

Eine Wahl eines Erwartungswerts als Referenzgröße ermöglicht die Zuordnung einer Vielzahl von Prüfcodes zu einer einzigen Referenzgröße. Denn der Erwartungswert kann so gebildet werden, dass er eine Mehrzahl von Zweierpotenzen repräsentiert, die jeweils unterschiedlichen Prüfcodes zugeordnet sein können. Auf diese Weise ist es möglich, eine ganze Wertemenge von Prüfcodes als Referenzgröße zu nutzen. Beispielsweise kann hiermit eine leichte Abweichung eines Istwerts einer Prozessgröße von einem Sollwert einer Prozessgröße noch als korrekt getestet werden, wenn deren zugeordnete Zweierpotenz in dem Erwartungswert enthalten ist.

Die erfindungsgemäße Anzeigeeinrichtung weist eine Bilderzeugungseinheit auf, welche dazu eingerichtet ist, auf Basis einer von einer Fahrzeugsteuerungseinrichtung erzeugten Soll-Prozessgröße bildliche Darstellungen zu erzeugen. Teil der erfindungsgemäßen Anzeigeeinrichtung sind außerdem eine Bilddarstellungseinheit zum Darstellen der bildlichen Darstellungen auf einer Bildanzeige und eine Prüfcode-Ermittlungseinheit zum Ermitteln eines Ist-Prüfcodes auf Basis der auf der Bildanzeige dargestellten Bildinformation. Überdies umfasst die erfindungsgemäße Anzeigeeinrichtung auch eine Bildprüfungseinheit. Die Bildprüfungseinheit ist dazu eingerichtet, eine von einer Fahrzeugsteuerung erzeugte Soll-Prozessgröße zu erfassen und eine der Soll-Prozessgröße anhand einer zweiten Tabelle eindeutig zugeordnete Zweierpotenzsumme zu ermitteln. Weiterhin ist die Bildprüfungseinheit dazu eingerichtet, einen von der Prüfcode-Ermittlungseinheit ermittelten Ist-Prüfcode zu erfassen und eine dem eingelesenen Ist-Prüfcode anhand der ersten Tabelle eindeutig zugeordnete Zweierpotenz zu ermitteln. Zudem weist die Bildprüfungseinheit eine Prüffunktion auf zum Prüfen, ob die bildliche Darstellung korrekt ist, wobei getestet wird, ob die dem Ist-Prüfcode zugeordnete Zweierpotenz in der Zweierpotenzsumme der Soll-Prozessgröße ist.

Eine solche Anzeigeeinrichtung kann als Anzeigeeinheit ausgebildet sein, welche die Bilderzeugungseinheit, die Bilddarstellungseinheit, die Prüfcode-Ermittlungseinheit und die Bildprüfungseinheit umfasst. Die Anzeigeeinrichtung kann aber auch eine separate Bildinformationserzeugungseinheit, welche die Bilderzeugungseinheit und die Bildprüfungseinheit umfasst, und eine davon räumlich getrennte Anzeigeeinheit aufweisen, welche die Bilddatendarstellungseinheit und die Prüfcode-Ermittlungseinheit umfasst.

Der erfindungsgemäße Führerstand für ein Verkehrsmittel weist eine Fahrzeugsteuerungseinrichtung zum Empfangen von Sensordaten betreffend eine Soll-Prozessgröße und zum Erzeugen einer Soll-Prozessgröße auf Basis der Sensordaten auf. Der erfindungsgemäße Führerstand umfasst außerdem eine erfindungsgemäße Anzeigeeinrichtung.

Die wesentlichen Komponenten der erfindungsgemäßen Anzeigeeinrichtung können zum überwiegenden Teil in Form von Softwarekomponenten ausgebildet sein. Dies betrifft insbesondere die Bilderzeugungseinheit, die Prüfcode-Ermittlungseinheit und die Bildprüfungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen zwischen einzelnen Einheiten, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Anzeigeeinrichtungen auf einfache Weise durch ein Software-Update nachgerüstet werden können, um auf die erfindungsgemäße Weise zu arbeiten. Insofern wird die Aufgabe auch durch ein Computerprogrammprodukt mit einem Computerprogramm gelöst, welches direkt in einen Speicher einer Anzeigeeinrichtung ladbar ist, mit Programmcodeabschnitten, um alle Schritte des erfindungsgemäßen Verfahrens auszuführen, wenn das Programm in der Anzeigeeinrichtung ausgeführt wird.

Ein solches Computerprogrammprodukt kann neben dem Computerprogramm gegebenenfalls zusätzliche Bestandteile wie z.B. eine Dokumentation und/oder zusätzliche Komponenten auch Hardware-Komponenten, wie z.B. Hardware-Schlüssel (Dongles etc.) zur Nutzung der Software, umfassen

Zum Transport zur Anzeigeeinrichtung und/oder zur Speicherung an oder in der Anzeigeeinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Anzeigeeinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer bevorzugten Ausgestaltung des erfindungsgemäßen Verfahrens zum Überwachen einer Anzeige eines Führerstands eines Verkehrsmittels wird vorab die erste Tabelle, also die Tabelle, welche einzelnen Prüfcodes Zweierpotenzen eindeutig zuweist, mit Hilfe der folgenden Schritte erzeugt: Es wird eine bildliche Darstellung für einen ersten Wert einer Prozessgröße erzeugt. Über die bildliche Darstellung wird ein Prüfcode berechnet. Weiterhin wird eine Zweierpotenz dem Prüfcode eindeutig zugeordnet und der Prüfcode und die zugeordnete Zweierpotenz werden in der ersten Tabelle abgespeichert. Die genannten Schritte werden für jeden weiteren möglichen Prozesswert wiederholt, so dass eine vollständige Tabelle mit Prüfcodes und diesen eindeutig zugeordneten Zweierpotenzen entsteht.

In einer bevorzugten Ausgestaltung des erfindungsgemäßen Verfahrens wird die zweite Tabelle mit Hilfe der folgenden Schritte erzeugt: Es wird eine Mehrzahl von gültigen bildlichen Darstellungen zu einem ersten Prozesswert einer Prozessgröße ausgewählt. D.h., es werden die bildlichen Darstellungen in einem vorbestimmten Toleranzintervall zu um einen Wert einer Prozessgröße liegenden Werten oder andersfarbliche Darstellungen der Prozessgröße ermittelt. Nachfolgend werden auf Basis der ausgewählten bildlichen Darstellungen die zugeordneten Prüfcodes berechnet. Anschließend wird eine dem jeweiligen Prüfcode zugeordnete Zweierpotenz aus der ersten Tabelle entnommen und eine Zweierpotenzsumme durch Addieren aller dem ersten Prozesswert zugeordneten aufgefundenen Zweierpotenzen ermittelt. Nun wird der erste Wert der Prozessgröße mit der zugeordneten Zweierpotenzsumme zusammen in der zweiten Tabelle gespeichert. Die genannten Schritte werden mit jedem möglichen Prozesswert wiederholt, um eine vollständige Tabelle mit Prozesswerten und diesen zugeordneten Zweierpotenzsummen zu erzeugen.

D.h., es werden zu jedem Wert einer Prozessgröße z.B. Werte ermittelt, die in einem Toleranzintervall liegen, und zu diesen Werten werden die entsprechenden Prüfcodes ermittelt. Anschließend werden Zweierpotenzen zu den in dem Toleranzintervall ermittelten Prüfcodes anhand der ersten Tabelle ermittelt. Schließlich wird ein Erwartungswert als Zweierpotenzsumme der zugeordneten Primzahlen ermittelt. Auf diese Weise lässt sich vorteilhaft ein Toleranzintervall um einen Prozesswert herum definieren. Das Toleranzintervall kann zum Beispiel Werte von Prozessgrößen umfassen, welche etwas kleiner oder größer als der ermittelte Sollwert der Prozessgröße sind. Diesen Werten innerhalb des Toleranzintervalls werden nun ebenfalls Prüfcodes zugewiesen und den jeweiligen Prüfcodes werden wiederum unterschiedliche Zweierpotenzen zugeordnet. Aus den einzelnen Zweierpotenzen lässt sich dann ein Erwartungswert berechnen, der sämtliche Zweierpotenzen und damit auch Prüfcodes repräsentiert, die den Werten des Toleranzintervalls zugeordnet sind. Mithin muss bei einer Prüfung, ob ein Istwert der Prozessgröße korrekt ist, nur geprüft werden, ob eine entsprechende Zweierpotenz, die einem Ist-Prüfcode zugeordnet ist, der auf Basis des Istwertes und einer Bildinformation berechnet wurde, in dem ermittelten Erwartungswert als Summand enthalten ist.

Besonders bevorzugt umfasst das Verkehrsmittel eine der folgenden Verkehrsmittelarten:
- einen Zug,
- ein Flugzeug,
- einen Autobus,
- einen Lastwagen,
- einen Pkw.

Insbesondere im kommerziellen Personentransport sind Maßnahmen zur Gewährleistung der Sicherheit der Passagiere besonders wichtig. Hierzu gehört auch die Absicherung von korrekten Informationen hinsichtlich des Fahrzustands des Transportmittels.

In einer besonders effektiven Variante des erfindungsgemäßen Verfahrens zum Überwachen einer Anzeige eines Führerstands eines Verkehrsmittels umfasst die Soll-Prozessgröße eine Geschwindigkeit eines Verkehrsmittels. Eine in bestimmten Grenzen korrekte Anzeige der Geschwindigkeit eines Verkehrsmittels ist besonders sicherheitsrelevant, da insbesondere aufgrund einer überhöhten Geschwindigkeit schwere Unfälle passieren können. Alternativ oder zusätzlich kann die Soll-Prozessgröße auch eine Beschleunigung oder Verzögerung einer Bewegung des Verkehrsmittels umfassen.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zum Überwachen einer Anzeige eines Führerstands eines Zugs gemäß einem Ausführungsbeispiel der Erfindung veranschaulicht,
- FIG 2: ein Flussdiagramm, welches Schritte zum Erstellen einer ersten Tabelle im Detail veranschaulicht,
- FIG 3: ein Flussdiagramm, welches Schritte zum Erstellen einer zweiten Tabelle im Detail veranschaulicht,
- FIG 4: eine schematische Darstellung eines Führerstands eines Zugs gemäß einem ersten Ausführungsbeispiel der Erfindung,
- FIG 5: eine schematische Darstellung eines Führerstands eines Zugs gemäß einem zweiten Ausführungsbeispiel der Erfindung.

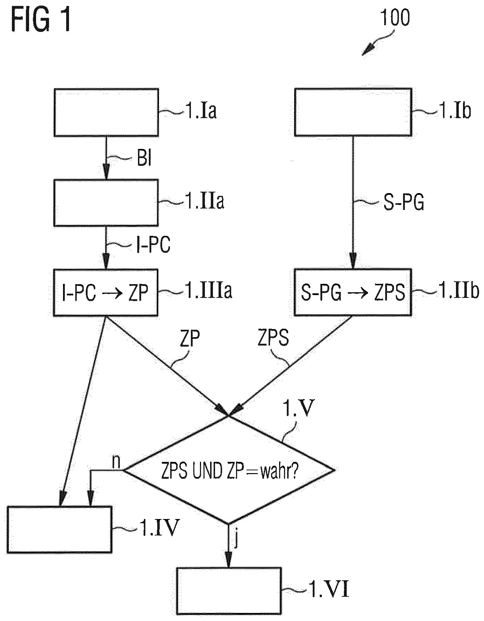

In FIG 1 ist ein Flussdiagramm 100 gezeigt, welches ein Verfahren zum Überwachen einer Anzeige eines Führerstands eines Zugs gemäß einem Ausführungsbeispiel der Erfindung verdeutlicht.

Bei dem Schritt 1.Ia wird zunächst eine bildliche Darstellung BI eines Werts einer Prozessgröße von einer Bilddarstellungseinheit einer Anzeigeeinrichtung empfangen.

Bei dem Schritt 1.IIa wird dann über die bildliche Darstellung BI ein Ist-Prüfcode I-PC berechnet. Auf Basis einer ersten Tabelle TAB1 wird weiter bei einem Schritt 1.IIIa eine dem ermittelten Ist-Prüfcode I-PC zugeordnete Zweierpotenz ZP ermittelt. Falls keine Zweierpotenz für den Ist-Prüfcode I-PC in der ersten Tabelle TAB1 eingetragen ist, weil dieser zum Beispiel falsch ist, so wird bei dem Schritt 1.IV eine entsprechende Fehlerreaktion ausgelöst.

Bei dem Schritt 1.Ib wird von der Fahrzeugsteuerungseinrichtung ein Wert einer Soll-Prozessgröße S-PG empfangen.

Die Soll-Prozessgröße S-PG kann zum Beispiel eine auf einer Anzeige des Führerstands dargestellte Geschwindigkeit des Verkehrsmittels umfassen. Es wird angenommen, dass eine die Geschwindigkeit ermittelnde Einheit, beispielsweise eine Fahrzeugsteuerungseinrichtung, als solche korrekt funktioniert und nur die Übertragung an ein Display und die Anzeige auf dem Display nicht sicher sind bzw. zu überprüfen sind. Mithin kann die von der Fahrzeugsteuerungseinrichtung ermittelte Geschwindigkeit als Sollgeschwindigkeit bzw. Soll-Prozessgröße S-PG verwendet werden.

Bei dem Schritt 1.IIb wird eine dem Wert der erfassten Soll-Prozessgröße S-PG zugeordnete Zweierpotenzsumme ZPS einer zweiten Tabelle TAB2 entnommen.

Nachfolgend wird bei dem Schritt 1.V geprüft, ob die bei dem Schritt 1.IIIa ermittelte Zweierpotenz ZP in der bei dem Schritt 1.IIb ermittelten Zweierpotenzsumme ZPS enthalten ist. Ist dies der Fall, was in FIG 1 mit "j" gekennzeichnet ist, so kann die angezeigte bildliche Darstellung (z.B. der angezeigte Geschwindigkeitswert) bei dem Schritt 1.VI als korrekt eingestuft werden. Andernfalls wird ermittelt, dass die angezeigte bildliche Darstellung (z.B. der angezeigte Geschwindigkeitswert) fehlerhaft ist, was in FIG 1 mit "n" gekennzeichnet ist. In diesem Fall wird bei dem Schritt 1.IV eine entsprechende Fehlerreaktion ausgelöst. Die Prüfung, ob eine Zweierpotenz ZP in einer Zweierpotenzsumme enthalten ist, kann zum Beispiel als bitweise logische AND-Operation ausgeführt werden. Ist die Zweierpotenz ZP in der Zweierpotenzsumme ZPS enthalten, so ergibt sich für das der Zweierpotenz ZP entsprechende Bit eine Übereinstimmung mit dem entsprechenden Bit der Zweierpotenzsumme ZPS.

Anschließend wird der Ablauf aus FIG 1 zur Prüfung der Anzeige wieder bei den Schritten 1.Ia und 1.Ib neu gestartet.

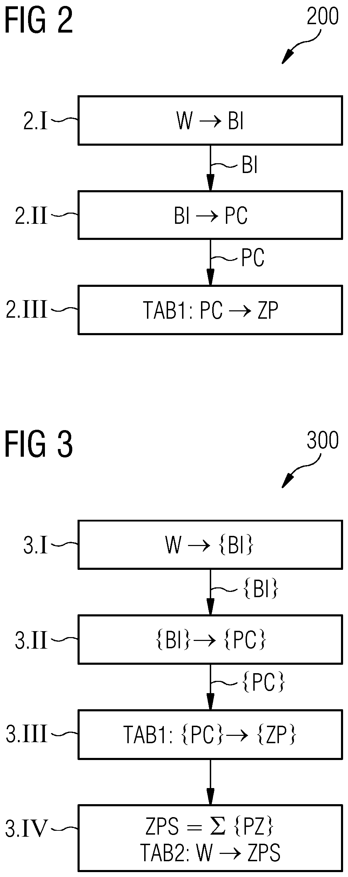

In FIG 2 ist ein Flussdiagramm 200 gezeigt, welches Schritte zum Erstellen der ersten Tabelle TAB1 im Detail veranschaulicht. Die in FIG 2 beschriebenen Schritte werden vorzugsweise vorab, d.h. vor der Anwendung des in FIG 1 gezeigten Verfahrens durchgeführt. Bei dem Schritt 2.1 wird für einen ersten Wert W einer Prozessgröße PG eine bildliche Darstellung BI erzeugt. Auf Basis der erzeugten bildlichen Darstellung BI wird dann bei dem Schritt 2.II ein Prüfcode PC berechnet. Schließlich wird bei dem Schritt 2.III auf eindeutige Weise eine Zweierpotenz ZP dem ermittelten Prüfcode PC zugeordnet und der Prüfcode PC und die diesem zugeordnete Zweierpotenz ZP in der ersten Tabelle TAB1 gespeichert. Die Schritte 2.I bis 2.II werden weiterhin für jeden möglichen Prozesswert W wiederholt, so dass eine vollständige erste Tabelle TAB1 entsteht.

In FIG 3 wird ein Flussdiagramm 300 veranschaulicht, welches Schritte zum Erstellen einer zweiten Tabelle TAB2 im Detail veranschaulicht. Auch die Erstellung der zweiten Tabelle wird vorzugsweise vorab, d.h. vor der Anwendung des in FIG 1 gezeigten Verfahrens durchgeführt, aber nach dem in FIG 2 gezeigten Verfahren.

Bei dem Schritt 3.I werden zunächst zu einem ersten Wert W einer Prozessgröße die als korrekt angesehenen bildlichen Darstellungen {BI} ausgewählt. Hierbei können die in FIG 2 im Schritt 2.I erzeugten bildlichen Darstellungen verwendet werden. Bei dem Schritt 3.II werden zu der Menge der bildlichen Darstellungen {BI} jeweils die zugehörigen Prüfcodes {PC} berechnet. Anschließend wird bei dem Schritt 3.III die erste Tabelle TAB1 eingelesen und es werden zu den jeweiligen Prüfcodes {PC} diesen in der ersten Tabelle TAB1 zugeordnete Zweierpotenzen {ZP} ermittelt. Schließlich wird bei dem Schritt 3.IV ein Erwartungswert ZPS als Summe der zugeordneten Zweierpotenzen {ZP} berechnet und der erste Wert W der Prozessgröße und der Erwartungswert ZPS in der zweiten Tabelle TAB2 gespeichert. Die Schritte 3.I bis 3.IV werden ebenfalls für jeden der einzelnen möglichen weiteren Werte w von Prozessgrößen wiederholt, so dass eine vollständige zweite Tabelle TAB2 erzeugt wird.

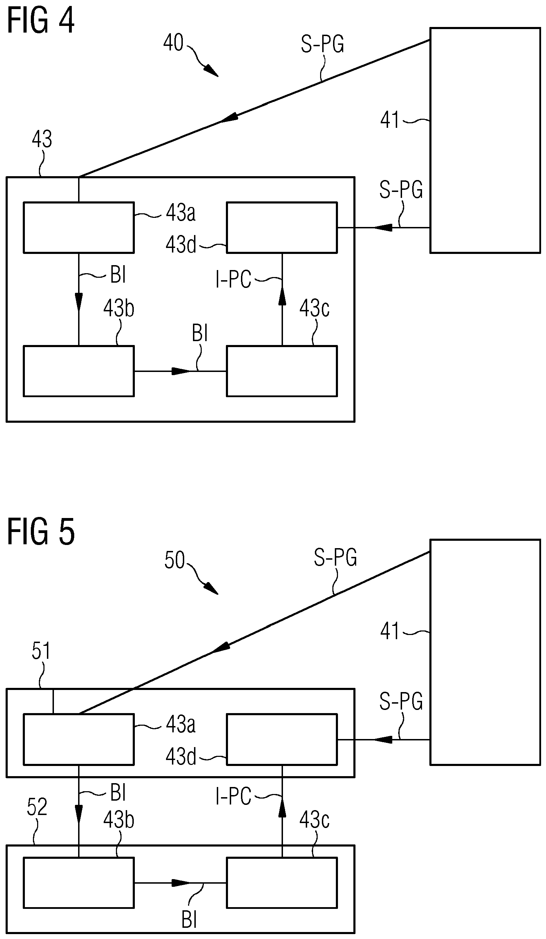

In FIG 4 ist ein Führerstand 40 eines Verkehrsmittels, beispielsweise eines Zugs, schematisch dargestellt. Der Führerstand 40 umfasst eine Anzeigeeinrichtung 43 und eine Fahrzeugsteuerungseinrichtung 41. Die Fahrzeugsteuerungseinrichtung 41 ist dazu eingerichtet, eine Prozessgröße, beispielsweise eine Soll-Prozessgröße S-PG, zu erzeugen. Die Anzeigeeinrichtung 43 umfasst eine Bilderzeugungseinheit 43a, eine Bilddatendarstellungseinheit 43b, eine Prüfcode-Ermittlungseinheit 43c und eine Bildprüfungseinheit 43d. Der Wert der Soll-Prozessgröße S-PG wird an die Bilderzeugungseinheit 43a übermittelt. Die Bilderzeugungseinheit 43a erzeugt auf Basis der empfangenen Prozessgröße S-PG Bilddaten BI. Die Bilddaten BI werden dann an die Bilddatendarstellungseinheit 43b übermittelt und dort angezeigt. Auf Basis der dargestellten Bildinformation BI wird von der Prüfcode-Ermittlungseinheit 43c ein Ist-Prüfcode I-PC ermittelt. Der ermittelte Ist-Prüfcode I-PC wird nachfolgend an die Bildprüfungseinheit 43d übermittelt. Die Bildprüfungseinheit 43d erhält zusätzlich von der Fahrzeugsteuerungseinrichtung 41 einen Wert der Soll-Prozessgröße S-PG und führt einen Vergleich der Soll-Prozessgröße S-PG mit der Ist-Prozessgröße I-PG entsprechend den in FIG 1 veranschaulichten Schritten 1.I bis 1. VI durch.

In FIG 5 ist eine dem in FIG 4 veranschaulichten Führerstand 40 sehr ähnliche Anordnung 50 gemäß einem alternativen Ausführungsbeispiel gezeigt. Der in FIG 5 gezeigte Führerstand 50 umfasst ebenfalls eine Fahrzeugsteuerungseinrichtung 41. Anders als bei der in FIG 4 gezeigten Anordnung sind in FIG 5 die Bilderzeugungseinheit 43a und die Bildprüfungseinheit 43d in einer separaten Bildinformationserzeugungseinheit 51 untergebracht und die Bilddatendarstellungseinheit 43b und die Prüfcode-Ermittlungseinheit 43c sind getrennt davon in einer Anzeigeeinheit 52 angeordnet. Eine solche Aufteilung in Bildinformationserzeugungseinheit 51 und Anzeigeeinheit 52 ist in WO 2015/082331 A1 beschrieben, auf deren Inhalt Bezug genommen wird und deren Inhalt hiermit in der vorliegenden Anmeldung mit einbezogen ist.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. So wurden das Verfahren und die Vorrichtung in erster Linie im Zusammenhang mit einer Anzeige in einem Führerstand eines Zugs erläutert. Das genannte Verfahren ist jedoch nicht auf die Anwendung in einem Führerstand eines Zugs beschränkt, sondern kann auch in anderen Verkehrsmitteln eingesetzt werden. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

Die Erfindung wird durch die angehängten unabhängigen Ansprüche definiert. Die abhängigen Ansprüche definieren bevorzugte Ausführungsbeispiele.

## Patentansprüche

1. Verfahren zum Überwachen einer Anzeige eines Führerstands (40, 50) eines Verkehrsmittels, aufweisend die Schritte:
- Erfassen einer Soll-Prozessgröße (S-PG) und Erzeugen einer bildlichen Darstellung (BI) eines Wertes der Soll-Prozessgröße durch eine Anzeigeeinrichtung (43, 52),
- Berechnen eines Ist-Prüfcodes (I-PC) über die bildliche Darstellung (BI),
- Ermitteln einer dem berechneten Ist-Prüfcode (I-PC) anhand einer ersten Tabelle (TAB1) eindeutig zugeordneten Zweierpotenz (ZP),
- Erfassen einer von einer Fahrzeugsteuerungseinrichtung (41) erzeugten Soll-Prozessgröße (S-PG),
- Ermitteln einer der Soll-Prozessgröße (S-PG) anhand einer zweiten Tabelle (TAB2) eindeutig zugeordneten Zweierpotenzsumme (ZPS),
- Prüfen, ob die bildliche Darstellung (BI) korrekt ist, durch Ermitteln, ob die dem Ist-Prüfcode (I-PC) zugeordnete Zweierpotenz (ZP) in der Zweierpotenzsumme (ZPS) enthalten ist.

2. Verfahren nach Anspruch 1, wobei die erste Tabelle (TAB1) mit Hilfe der folgenden Schritte erzeugt wird:
- Erzeugen einer bildlichen Darstellung (BI) für einen ersten Wert (W) einer Prozessgröße (PG),
- Berechnen eines Prüfcodes (PC) in Abhängigkeit von der bildlichen Darstellung (BI),
- eindeutiges Zuordnen einer Zweierpotenz (ZP) zu dem Prüfcode (PC) und Speichern des Prüfcodes (PC) und der zugeordneten Zweierpotenz (ZP) in der ersten Tabelle (TAB1),
- Wiederholen der Schritte mit jedem weiteren möglichen Wert (W) der Prozessgröße (PG).

3. Verfahren nach Anspruch 1 oder 2, wobei die zweite Tabelle (TAB2) mit Hilfe der folgenden Schritte erzeugt wird:
- Auswählen einer Menge von gültigen bildlichen Darstellungen ({BI}) zu einem ersten Wert (W) einer Prozessgröße (PG),
- Berechnen einer Menge von gültigen Prüfcodes {PC} für die gültigen bildlichen Darstellungen ({BI}),
- Auslesen der den jeweiligen Prüfcodes ({PC}) zugeordneten Zweierpotenzen ({ZP}) aus der ersten Tabelle (TAB1),
- Erzeugen einer Zweierpotenzsumme (ZPS) durch Addieren aller dem ersten Prozesswert (W) zugeordneten aufgefundenen Zweierpotenzen ({ZP}) und Speichern des ersten Prozesswertes (W) zusammen mit der zugeordneten Zweierpotenzsumme (ZPS) in der zweiten Tabelle (TAB2),
- Wiederholen der Schritte mit jedem möglichen Wert (W) der Prozessgröße (PG).

4. Verfahren nach einem der Ansprüche 1 bis 3, wobei das Verkehrsmittel eines der folgenden Verkehrsmittelarten umfasst:
- einen Zug,
- ein Flugzeug,
- einen Autobus,
- einen Lastwagen,
- einen Pkw.

5. Verfahren nach einem der Ansprüche 1 bis 4, wobei die Soll-Prozessgröße (S-PC) eine ermittelte Geschwindigkeit des Verkehrsmittels umfasst.

6. Anzeigeeinrichtung (43, 51, 52), aufweisend:
- eine Bilderzeugungseinheit (43a), welche dazu eingerichtet ist, auf Basis eines Wertes einer von einer Fahrzeugsteuerungseinrichtung (41) erzeugten Soll-Prozessgröße (S-PG) bildliche Darstellungen (BI) zu erzeugen,
- eine Bilddarstellungseinheit (43b) zum Darstellen der bildlichen Darstellungen (BI) auf einer Bildanzeige,
- eine Prüfcode-Ermittlungseinheit (43c) zum Ermitteln eines Ist-Prüfcodes (I-PC) auf Basis der bildlichen Darstellungen (BI) auf der Bildanzeige,
- eine Bildprüfungseinheit (43d) zum
- Erfassen einer von einer Fahrzeugsteuerungseinrichtung (41) erzeugten Soll-Prozessgröße (S-PG),
- Ermitteln einer der Soll-Prozessgröße (S-PG) anhand einer zweiten Tabelle (TAB2) eindeutig zugeordneten Zweierpotenzsumme (ZPS),
- Erfassen des von der Prüfcode-Ermittlungseinheit (43c) ermittelten Ist-Prüfcodes (I-PC),
- Ermitteln einer dem eingelesenen Ist-Prüfcode (I-PC) anhand einer ersten Tabelle (TAB1) eindeutig zugeordneten Zweierpotenz (ZP),
- Prüfen, ob die bildliche Darstellung (BI) korrekt ist, durch Ermitteln, ob die dem Ist-Prüfcode (I-PC) zugeordnete Zweierpotenz (ZP) in der Zweierpotenzsumme (ZPS) enthalten ist.

7. Führerstand (40, 50) für ein Verkehrsmittel, aufweisend:
- eine Anzeigeeinrichtung (43, 51, 52) nach Anspruch 6, und
- eine Fahrzeugsteuerungseinrichtung (41) zum Empfangen von Sensordaten betreffend eine Soll-Prozessgröße (S-PG) und zum Erzeugen einer Soll-Prozessgröße auf Basis der Sensordaten.

8. Computerprogrammprodukt mit einem Computerprogramm, welches direkt in eine Speichereinrichtung einer Anzeigeeinrichtung (43, 51, 52) eines Verkehrsmittels ladbar ist, mit Programmabschnitten, um alle Schritte eines Verfahrens nach einem der Ansprüche 1 bis 5 auszuführen, wenn das Computerprogramm in der Anzeigeeinrichtung (43, 51, 52) ausgeführt wird.

9. Computerlesbares Medium, auf welchem von einer Rechnereinheit einlesbare und ausführbare Programmabschnitte gespeichert sind, um alle Schritte eines Verfahrens nach einem der Ansprüche 1 bis 5 auszuführen, wenn die Programmabschnitte von der Rechnereinheit ausgeführt werden.

## Claims

1. Method for monitoring a display of a driver's cabin (40, 50) of a means of transportation, having the steps of:
- measuring a target process variable (S-PG) and producing an image representation (BI) of a value of the target process variable by way of a display device (43, 52),
- calculating an actual check code (I-PC) via the image representation (BI),
- ascertaining a power of two (ZP) uniquely assigned to the calculated actual check code (I-PC) using a first table (TAB1),
- measuring a target process variable (S-PG) produced by a vehicle control device (41),
- ascertaining a power-of-two sum (ZPS) uniquely assigned to the target process variable (S-PG) using a second table (TAB2),
- checking whether the image representation (BI) is correct by ascertaining whether the power of two (ZP) assigned to the actual check code (I-PC) is contained in the power-of-two sum (ZPS) .

2. Method according to Claim 1, wherein the first table (TABL) is produced with the aid of the following steps:
- producing an image representation (BI) for a first value (W) of a process variable (PG),
- calculating a check code (PC) in dependence on the image representation (BI),
- uniquely assigning a power of two (ZP) to the check code (PC) and storing the check code (PC) and the assigned power of two (ZP) in the first table (TAB1),
- repeating the steps with each further possible value (W) of the process variable (PG).

3. Method according to Claim 1 or 2, wherein the second table (TAB2) is produced with the aid of the following steps:
- selecting a set of valid image representations ({BI}) for a first value (W) of a process variable (PG),
- calculating a set of valid check codes {PC} for the valid image representations ({BI}),
- reading the powers of two ({ZP}) assigned to the respective check codes ({PC}) from the first table (TAB1),
- producing a power-of-two sum (ZPS) by adding all the found powers of two ({ZP}) assigned to the first process value (W) and storing the first process value (W) together with the assigned power-of-two sum (ZPS) in the second table (TAB2),
- repeating the steps with each possible value (W) of the process variable (PG).

4. Method according to any of Claims 1 to 3, wherein the means of transportation comprises one of the following transportation means types:
- a train,
- an aeroplane,
- a bus,
- a lorry,
- a passenger car.

5. Method according to any of Claims 1 to 4, wherein the target process variable (S-PC) comprises an ascertained speed of the means of transportation.

6. Display device (43, 51, 52), having:
- an image production unit (43a), which is configured to produce image representations (BI) on the basis of a value of a target process variable (S-PG) produced by a vehicle control device (41),
- an image representation unit (43b) for representing the image representations (B1) on an image display,
- a check code ascertainment unit (43c) for ascertaining an actual check code (I-PC) on the basis of the image representations (BI) on the image display,
- an image check unit (43d) for
- measuring a target process variable (S-PG) produced by a vehicle control device (41),
- ascertaining a power-of-two sum (ZPS) uniquely assigned to the target process variable (S-PG) on the basis of a second table (TAB2),
- measuring the actual check code (I-PC) ascertained by the check code ascertainment unit (43c),
- ascertaining a power of two (ZP) uniquely assigned to the read actual check code (I-PC) on the basis of a first table (TAB1),
- checking whether the image representation (BI) is correct by ascertaining whether the power of two (ZP) assigned to the actual check code (I-PC) is contained in the power-of-two sum (ZPS).

7. Driver's cabin (40, 50) for a means of transportation, having:
- a display device (43, 51, 52) according to Claim 6, and
- a vehicle control device (41) for receiving sensor data relating to a target process variable (S-PG) and for producing a target process variable on the basis of the sensor data.

8. Computer program product having a computer program which is loadable directly into a storage device of a display device (43, 51, 52) of a means of transportation, having program sections for carrying out all the steps of a method according to any of Claims 1 to 5 when the computer program is executed in the display device (43, 51, 52).

9. Computer-readable medium, on which program sections that are able to be read and executed by a computer unit are stored in order to carry out all the steps of a method according to any of Claims 1 to 5 when the program sections are executed by the computer unit.

## Revendications

1. Procédé pour la surveillance d'un affichage d'un poste de conducteur (40, 50) d'un moyen de transport, comprenant les étapes suivantes :
- mesure d'une grandeur de processus de consigne (S-PG) et génération d'une représentation graphique (BI) d'une valeur de la grandeur de processus de consigne à l'aide d'un dispositif d'affichage (43, 52),
- calcul d'un code de vérification effectif (I-PC) par l'intermédiaire de la représentation graphique (BI),
- détermination d'une puissance de deux (ZP) attribuée de manière unique au code de vérification effectif (I-PC) à l'aide d'une première table (TAB1),
- mesure d'une grandeur de processus de consigne (S-PG) générée par un dispositif de commande du véhicule (41),
- détermination d'une somme de puissances de deux (ZPS) attribuée de manière unique à la grandeur de processus de consigne (S-PG) à l'aide d'une deuxième table (TAB2),
- vérification si la représentation graphique (BI) est correcte en déterminant si la puissance de deux attribuée au code de vérification effectif (I-PC) est contenue dans la somme de puissances de deux (ZPS).

2. Procédé selon la revendication 1, dans lequel la première table (TAB1) est générée à l'aide des étapes suivantes :
- génération d'une représentation graphique (BI) pour une première valeur (W) d'une grandeur de processus (PG),
- calcul d'un code de vérification (PC) en fonction de la représentation graphique (BI),
- attribution unique d'une puissance de deux (ZP) au code de vérification (PC) et enregistrement du code de vérification (PC) et de la puissance de deux (ZP) attribuée dans la première table (TAB1),
- répétition des étapes avec chaque valeur possible (W) de la grandeur de processus (PG).

3. Procédé selon la revendication 1 ou 2, dans lequel la deuxième table (TAB2) est générée à l'aide des étapes suivantes :
- sélection d'une quantité de représentations graphiques ({BI}) valides en une première valeur (W) d'une grandeur de processus (PG),
- calcul d'une quantité de codes de vérification {PC} pour les représentations graphiques ({BI}) valides,
- lecture des puissances de deux ({ZP}) attribuées aux codes de vérification ({PC}) respectifs dans la première table (TAB1),
- génération d'une somme de puissances de deux (ZPS) par addition de toutes les puissances de deux ({ZP}) trouvées attribuées à la première valeur de processus (W) et enregistrement de la première valeur de processus (W) conjointement avec la somme de puissances de deux (ZPS) dans la deuxième table (TAB2),
- répétition des étapes avec chaque valeur possible (W) de la grandeur de processus (PG).

4. Procédé selon l'une des revendications 1 à 3, dans lequel le moyen de transport comprend un des types de moyens de transport suivants :
- un train,
- un avion,
- un autobus,
- un poids-lourd,
- une voiture particulière.

5. Procédé selon l'une des revendications 1 à 4, dans lequel la grandeur de processus de consigne (S-PC) comprend une vitesse déterminée du moyen de transport.

6. Dispositif d'affichage (43, 51, 52) comprenant :
- une unité de génération d'image (43a) qui est conçue pour générer des représentations graphiques (BI) sur la base d'une valeur d'une grandeur de processus de consigne (S-PG) générée par un dispositif de commande du véhicule (41),
- une unité de représentation d'image (43b) pour la représentation des représentations graphiques (BI) sur un affichage graphique,
- une unité de détermination de code de vérification (43c) pour la détermination d'un code de vérification effectif (I-PC) sur la base des représentations graphiques (BI) sur l'affichage graphique,
- une unité de vérification d'image (43d) pour
- la mesure d'une grandeur de processus de consigne (S-PG) générée par un dispositif de commande du véhicule (41),
- la détermination d'une somme de puissances de deux (ZPS) attribuée de manière unique à la grandeur de processus de consigne (S-PG) à l'aide d'une deuxième table (TAB2),
- la mesure du code de vérification effectif (I-PC) déterminé par l'unité de détermination de code de vérification (43c),
- la détermination d'une puissance de deux (ZP) attribuée de manière unique au code de vérification effectif (I-PC) lu à l'aide d'une première table (TAB1),
- la vérification si la représentation graphique (BI) est correcte en déterminant si la puissance de deux (ZP) attribuée au code de vérification effectif (I-PC) est contenue dans la somme de puissances de deux (ZPS).

7. Poste de conducteur (40, 50) pour un moyen de transport, comprenant :
- un dispositif d'affichage (43, 51, 52) selon la revendication 6 et
- un dispositif de commande de véhicule (41) pour la réception de données de capteurs concernant une grandeur de processus de consigne (S-PG) et pour la génération d'une grandeur de processus de consigne sur la base des données de capteurs.

8. Produit de programme informatique avec un programme informatique qui peut être chargé directement dans un dispositif d'enregistrement d'un dispositif d'affichage (43, 51, 52) d'un moyen de transport, avec des sections de programme permettant d'exécuter toutes les étapes d'un procédé selon l'une des revendications 1 à 5, lorsque le programme informatique est exécuté dans le dispositif d'affichage (43, 51, 52).

9. Support lisible par un ordinateur sur lequel sont enregistrées de sections de programme pouvant être lues et exécutées par une unité de calcul, afin d'exécuter toutes les étapes d'un procédé selon l'une des revendications 1 à 5, lorsque les sections du programme sont exécutées par l'unité de calcul.
